Europäisches Patentamt

European Patent Office

Office européen des brevets

(11) Numéro de publication : **0 288 328 B1**

(12) **FASCICULE DE BREVET EUROPEEN**

(45) Date de publication du fascicule du brevet :
03.06.92 Bulletin 92/23

(51) Int. Cl.⁵ : **H02K 3/51**

(21) Numéro de dépôt : **88400226.2**

(22) Date de dépôt : **02.02.88**

(54) **Joue isolante d'un rotor de machine tournante électrique.**

(30) Priorité : **24.02.87 FR 8702871**

(43) Date de publication de la demande :
**26.10.88 Bulletin 88/43**

(45) Mention de la délivrance du brevet :
**03.06.92 Bulletin 92/23**

(84) Etats contractants désignés :
**DE ES IT**

(56) Documents cités :
**CH-A- 368 858**
**DE-A- 3 335 791**
**FR-A- 1 526 658**
**US-A- 2 683 233**
**US-A- 3 575 623**

(73) Titulaire : **VALEO EQUIPEMENTS
ELECTRIQUES MOTEUR
2, Rue André Boulle
F-94000 Creteil (FR)**

(72) Inventeur : **Guillot, Yves
3, Impasse des Rabattes
F-69290 Craponne (FR)**
Inventeur : **Roumanet, Alain
19 La Cigalière La Combe
F-38300 Maubec (FR)**

(74) Mandataire : **Gamonal, Didier
Société VALEO Service Propriété Industrielle
30, rue Blanqui
F-93406 Saint Ouen (FR)**

EP 0 288 328 B1

Jouve, 18, rue Saint-Denis, 75001 PARIS

# Description

La présente invention concerne un rotor de machine tournante électrique. Plus particulièrement, cette invention se rapporte aux rotors bobinés, avec des conducteurs électriques logés dans des encoches d'un paquet de tôles et réunis à un collecteur situé à une extrémité du rotor, et avec des joues isolantes accolées aux extrémités du paquet de tôles.

Dans un tel rotor, les conducteurs comportent des parties situées à l'extérieur du paquet de tôles du rotor. D'un côté du rotor, les parties extérieures des conducteurs sont raccordées aux lames du collecteur. De l'autre côté du rotor, les parties extérieures des conducteurs forment des têtes de bobines ou "chignons".

Ces parties des conducteurs, situées à l'extérieur des encoches, doivent être maintenues mécaniquement de manière à s'opposer aux effets de la force centrifuge lors du fonctionnement de la machine tournante. Actuellement, le maintien des parties extérieures des conducteurs est assuré au moyen de frettes se présentant comme des éléments annulaires rapportés, mis en place autour de l'ensemble des conducteurs, d'un côté du rotor.

Les frettes consituent ainsi des éléments supplémentaires, s'ajoutant aux autres pièces telles que les joues isolantes qui sont aussi à prévoir de part et d'autre du paquet de tôles du rotor. La réalisation de l'ensemble est ainsi relativement complexe et coûteuse.

Dans le document CH-A-36 858 on a proposé des frettes sous la forme de plateaux annulaires munis d'extensions cylindriques dans lesquelles les conducteurs sont noyés dans une résine isolante mais ces extensions n'assurent pas de façon directe, des fonctions de maintien et d'isolation vis-à-vis des conducteurs.

Dans le document DE-A-33 35 791 on a proposé un rotor équipé de pièces terminales situées aux extrémités des tôles, faisant office de frettes, notamment par les languettes qu'elles comportent. Cependant, lesdites languettes forment une structure discontinue dans la direction circonférentielle ce qui nuit à la résistance mécanique des frettes, notamment sous l'effet de la force centrifuge.

La présente invention remédie aux inconvénients susmentionnés et propose à cet effet une joue isolante d'un rotor de machine tournante électrique, avec des conducteurs logés dans des encoches d'un paquet de tôles et réunis à un collecteur situé à une extrémité du rotor, avec des joues isolantes appliquées contre les extrémités du paquet de tôles, dont l'une au moins comporte une collerette faisant office de frette raccordée à la partie centrale de la joue isolante par des pattes de liaison qui délimitent entre elles, et avec la collerette, des ouvertures disposées en correspondance avec les encoches du paquet de tôles et traversées par les conducteurs à leur sortie des encoches, ladite collerette située entre le paquet de tôles et le collecteur est caractérisée en ce que les pattes de liaison qui raccordent la collerette en continu à la partie centrale de la joue isolante ont toutes une forme coudée en "L", de manière à placer la collerette en avant du plan contenant la partie centrale de la joue isolante.

Les fonctions combinées de la joue exigent que celle-ci soit, d'une part, électriquement isolante et, d'autre part, résistante mécaniquemn et pour remplir convenablement son rôle de frette. A cet effet, la ou chaque joue isolante avec collerettes est réalisable comme une pièce métallique découpée et emboutie, enrobée d'un revêtement électriquement isolant.

L'invention sera mieux comprise à l'aide de la description qui suit, en référence aux dessins schématiques annexés représentant, à titre d'exemple non limitatif, une forme d'exécution préférentielle de ce rotor de machine tournante électrique :

    – la figure 1 est une vue en demi-coupe passant par l'axe d'un rotor conforme à la présente invention ;

    – la figure 2 est une vue de face de la joue isolante avec collerette ;

    – la figure 3 est une vue en coupe de cette joue, suivant III-III de la figure 2.

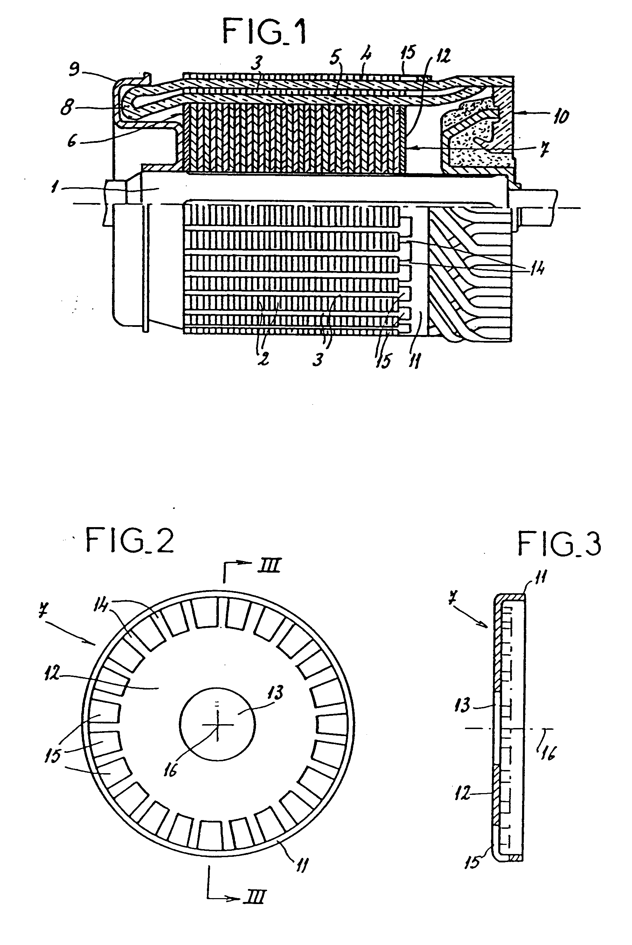

La figure 1 montre, dans son ensemble, le rotor d'une machine tournante électrique, calé sur l'arbre 1 de cette machine tournante. Le rotor comprend un paquet de tôles 2, présentant à sa périphérie des encoches 3 régulièrement espacées. Chaque encoche 3 reçoit deux conducteurs électriques superposés 4 et 5, appartenant respectivement à une couche extérieure et à une couche intérieure. Le paquet de tôles 2 est enserré entre deux joues isolantes 6 et 7, pourvues d'encoches ou de passages pour la sortie des conducteurs 4 et 5.

A une extrémité du paquet de tôles 2, les conducteurs 4 et 5 sont raccordés entre eux de manière à former des têtes de bobines ou "chignons" 8. Une coupelle 9, montée sur l'arbre 1, assure le maintien des têtes de bobines 8.

A l'autre extrémité du paquet de tôles 2, les conducteurs 4 et 5 sont raccordés aux lames d'un collecteur 10, monté sur l'arbre 2, le collecteur 10 étant du type plat ou "frontal" dans l'exemple considéré.

Pour assurer le maintien des conducteurs, et notamment ceux 4 de la couche extérieure, entre le paquet de tôles 2 et le collecteur 10, il est prévu selon l'invention de munir la joue isolante 7 d'une collerette 11. La joue isolante 7 avec sa collerette 11 est représentée seule aux figures 1 et 3.

Comme le montrent ces figures, la joue 7 possède une partie centrale pleine 12, de forme annulaire avec un trou central 13, dans lequel traverse l'arbre du rotor. La partie centrale 12 est reliée à la collerette 11 par des pattes de liaison 14, régulièrement espacées, qui délimitent entre elles des ouvertures 15, l'intervalle angulaire des pattes 14 correspondant au "pas" des encoches 3. Chaque patte de liaison 14 possède une forme coudée en "L", avec une première branche qui est située dans le plan de la partie centrale 12 de la joue 7 et se raccorde à cette partie, et avec une seconde branche qui est sensiblement parallèle à l'axe 16 de la joue 7 et qui se raccorde à la collerette 11. Ainsi, la collerette 11 est placée en avant du plan contenant la partie centrale 12.

Le montage de la joue 7 autour de l'arbre 1 est effectué dans un sens tel que la collerette 11 soit tournée du côté opposé au paquet de tôles 2, donc se situe entre ce paquet de tôles 2 et le collecteur 10. La joue 7 est appliquée contre la première tôle du paquet 2, de telle sorte que ses ouvertures 15 viennent en correspondance avec les encoches 3. Ainsi, chaque paire de conducteurs 4,5 d'une encoche 3 sort de cette encoche 3 en traversant une ouverture 15 de la joue 7. Vis-à-vis des conducteurs 4 de la couche extérieure, la collerette 11 joue le rôle d'une frette qui assure le maintien de ces conducteurs, en s'opposant aux effets de la force centrifuge lors de la rotation du rotor.

La joue 7 assure en outre une isolation électrique, par sa réalisation soit intégralement en matière plastique, soit en métal revêtu d'une couche isolante.

Il n'est pas exclu d'utiliser une joue analogue, avec collerette, du côté du rotor éloigné du collecteur, l'invention étant applicable indifféremment pour l'une ou l'autre des extrémités du paquet de tôles, ou pour les deux extrémités simultanément :

– en modifiant les détails de forme de cette joue, par exemple par l'adjonction de perforations, ou autres particularités justifiées pour des raisons de fabrication ou de montage, ou bien en étageant la collerette de manière à tenir compte d'un diamètre d'encombrement plus important des conducteurs à la sortie des encoches quand le collecteur est d'un diamètre plus grand que celui du paquet de tôles ;

– en appliquant l'invention à une machine tournante électrique de tout type, motrice ou génératrice, avec collecteur plat ou en forme de tambour.

## Revendications

1. Joue isolante d'un rotor de machine tournante électrique, avec des conducteurs (4,5) logés dans des encoches (3) d'un paquet de tôles (2) et réunis à un collecteur (10) situé à une extrémité du rotor, avec des joues isolantes (6,7) appliquées contre les extrémités du paquet de tôles (2), dont l'une au moins (6,7) comporte une collerette (11) faisant office de frette raccordée à la partie centrale (12) de la joue isolante (7) par des pattes de liaison (14) qui délimitent entre elles, et avec la collerette (11), des ouvertures (15) disposées en correspondance avec les encoches du paquet de tôles (2) et traversées par les conducteurs (4,5) à leur sortie des encoches (3), ladite collerette (11) située entre le paquet de tôles (2) et le collecteur (10) est caractérisée en ce que les pattes de liaison (14) qui raccordent la collerette (11) en continu à la partie centrale (12) de la joue isolante (7) ont toutes une forme coudée en "L", de manière à placer la collerette (11) en avant du plan contenant la partie centrale (12) de la joue isolante (7).

2. Joue isolante d'un rotor de machine tournante électrique, selon la revendication 1, caractérisée en ce que la ou chaque joue isolante (7), pourvue d'une collerette (11), est réalisée comme une pièce métallique découpée et emboutie, enrobée d'un revêtement électriquement isolant.

## Patentansprüche

1. Isolierende Endscheibe für einen Läufer einer elektrischen Drehmaschine mit Leitern (4, 5), die in Einschnitten (3) eines Blechpakets (2) liegen und mit einem an einem Ende des Läufers angeordneten Kollektor (10) verbunden sind, mit isolierenden Endscheiben (6, 7), die an den Enden des Blechpakets (2) anliegen, von denen wenigstens eine (6, 7) einen Kragen (11) aufweist, der als Bundring dient, welcher mit dem mittleren Teil (12) der isolierenden Endscheibe (7) durch Verbindungsklammern (14) verbunden ist, die untereinander und zusammen mit dem Kragen (11) Öffnungen (15) begrenzen, die entsprechend den Einschnitten im Blechpaket (2) angeordnet sind und durch welche die Leiter (4, 5) beim Austritt aus den Einschnitten (3) hindurchtreten, wobei der genannte Kragen (11) zwischen dem Blechpaket (2) und dem Kollektor (7) angeordnet ist, **dadurch gekennzeichnet**, daß die Verbindungsklammern (14), die den Kragen (11) durchgehend mit dem mittleren Teil (12) der isolierenden Endscheibe (7) verbinden, alle eine L-förmig gekrümmte Form haben, so daß der Kragen (11) vor der Ebene liegt, die den mittleren Teil (12) der isolierenden Endscheibe (7) enthält.

2. Isolierende Endscheibe für einen Läufer einer elektrischen Drehmaschine nach Anspruch 1, **dadurch gekennzeichnet**, daß die oder jede isolierende Endscheibe (7), die mit einem Kragen (11) versehen ist, als ausgeschnittenes und tiefgezogenes Metallstück ausgeführt ist, welches von einem elektrisch isolierenden Überzug umgeben ist.

## Claims

1. An insulating end plate for a rotor of a rotary electrical machine having conductors (4, 5) accommodated in slots (3) in a stack of laminations (2) and connected to a collector (10) situated at one end of the rotor, with insulating end plates (6, 7) being applied against the ends of the stack of laminations (2), and with at least one (6, 7) of the end plates including a collar portion (11), serving as a binding hoop and joined to the central portion (12) of the insulating end plate by means of connecting lugs which define between them, and with the collar portion (11), apertures (15) which are disposed in alignment with the slots in the stack of laminations (2), and through which the conductors (4, 5) pass at their exit from the slots (3), with the said collar portion (11) being situated between the stack of laminations (2) and the collector (10), is characterised in that all of the connecting lugs (14) that join the collar portion (11), without interruption, to the central portion (12) of the insulating end plate (7) are bent in an "L" shape in such a way as to locate the collar portion (1) in front of the plane containing the central portion (12) of the insulating end plate (7).

2. An insulating end plate for a rotor of a rotary electrical machine according to Claim 1, characterised in that the or each insulating end plate (7), having a collar portion (11), is in the form of a pressed-out and drawn metal component coated with an electrically insulating coating.

# FIG_1

# FIG_2

# FIG_3